# EUROPÄISCHE PATENTANMELDUNG

(11) **EP 1 850 450 A2**
(43) Veröffentlichungstag der Anmeldung: **31.10.2007**
(21) Anmeldenummer: 07008055.1
(22) Anmeldetag: 20.04.2007
(51) Int. Cl.: H02K 1/14, H02K 15/02

(54) **Elektromotor**

(30) Priorität: 28.04.2006 DE 102006021242
(71) Anmelder: Bühler Motor GmbH, 90459 Nürnberg (DE)
(72) Erfinder: Ihle, Olai, 90542 Eckental (DE); Peterreins, Thomas, 90475 Nürnberg (DE); Zimmerer, Christian, 91278 Pottenstein (DE); Zimmermann, Paul, 90451 Nürnberg (DE)

(57) **Zusammenfassung**

Die Erfindung betrifft Elektromotor (10) mit einem um eine zentrale Achse drehbar gelagerten Permanentmagnetrotor (50), einem bewickelten Stator (40) mit einer zylinderringförmigen Statorwicklung (41), Klauenpolen (42), die rechtwinklig zu scheibenförmigen Statorblechen (420) und um die zentrale Achse herum angeordnet sind und einem rohrförmigen Rückschlussring (43), der spielfrei mit den Statorblechen (420) verbunden ist. Aufgabe der Erfindung ist es einen Elektromotor darzustellen, bei dem der Stator aus möglichst wenigen Bauteilen zusammengesetzt ist, dessen Montage einfach ist, dessen Aufbau robust ist und der einen optimaler Wirkungsgrad aufweist, wobei eine große Formgebungsfreiheit und Bauraumnutzbarkeit und damit ein wirtschaftlicher Aufbau möglich ist. Diese Aufgabe wird erfindungsgemäß dadurch gelöst, dass die scheibenförmigen Statorbleche (420) mit Klauenpolen (42) einstückig sind und der Rückschlussring (43) mit den scheibenförmigen Statorblechen (420) verstemmt ist.

## Beschreibung

Die Erfindung betrifft Elektromotor (10) mit einem um eine zentrale Achse drehbar gelagerten Permanentmagnetrotor (50), einem bewickelten Stator (40) mit einer zylinderringförmigen Statorwicklung (41), Klauenpolen (42), die rechtwinklig zu scheibenförmigen Statorblechen (420) und um die zentrale Achse herum angeordnet sind und einem rohrförmigen Rückschlussring (43), der spielfrei mit den Statorblechen (420) verbunden ist.

Die gebräuchlichste Art Klauenpolstatoren herzustellen besteht darin aus einer Scheibe die vorgestanzten Klauen im Zentrum der Scheibe rechtwinklig abzubiegen. Auf diese Weise ist die maximale Länge der Klauen in Achsrichtung begrenzt auf ca. dem halben Innendurchmesser des Stators. Dadurch sind die erzielbaren Leistungen derartiger Motoren begrenzt und es müssen gegebenenfalls mehrere Statoren hintereinander angeordnet werden.

Aus der EP 1 263 115 A2 ist ein gattungsgemäßer Elektromotor bekannt. Bei dem bekannten Elektromotor ist der Stator aus vier Bauteilen zusammengesetzt. Dabei sind die Klauenpole aus streifenförmigen Blechen ausgestanzt und anschließend zu einem Ring gebogen und die Enden miteinander verbunden. Zwei dieser gebogenen Klauenpolbleche werden anschließend zusammen mit zwei weiteren Statorblechteilen montiert. Dieses Verfahren ist relativ aufwändig und unzuverlässig. Die vielen Nahtstellen erhöhen zudem den magnetischen Widerstand und verringern dadurch den Wirkungsgrad des Motors.

Aufgabe der Erfindung ist es daher einen Elektromotor darzustellen, bei dem der Stator aus möglichst wenigen Bauteilen zusammengesetzt ist, dessen Montage einfach ist, dessen Aufbau robust ist und der einen optimaler Wirkungsgrad aufweist, wobei eine große Formgebungsfreiheit und Bauraumnutzbarkeit und damit ein wirtschaftlicher Aufbau möglich ist.

Diese Aufgabe wird erfindungsgemäß dadurch gelöst, dass die scheibenförmigen Statorbleche (420) mit Klauenpolen (42) einstückig sind und der Rückschlussring (43) mit den scheibenförmigen Statorblechen (420) verstemmt ist. Hierdurch ist der magnetische Widerstand gering und entsprechend der Wirkungsgrad hoch und die Montage ist vereinfacht.

Weiterbildungen der Erfindung werden in den Unteransprüchen dargestellt. Der Rückschlussring (43) sollte möglichst spielfrei mit den Statorblechen (420) verbunden sein, um einen geringen magnetischen Widerstand und damit einen hohen Wirkungsgrad zu erreichen. Vorzugsweise wird die Verstemmung des Rückschlussrings (43) mit den Statorblechen (420) dadurch erreicht, dass der Rückschlussring (43) an mehreren Stellen in seinem axialen Randbereich geschlitzt ist und an die Schlitze (431) angrenzende Blechbrücken (430) radial nach innen verformt sind. Durch die Verformung ist der Rückschlussring nach innen auf die scheibenförmigen Statorbleche (420) gezogen, wodurch der magnetische Widerstand in diesem Bereich verringert ist. Weiter bilden die Blechbrücken (430) eine formschlüssige Verbindung zwischen dem Rückschlussring (43) und den scheibenförmigen Statorblechen (420), also auch den Klauenpolen (42) in axialer Richtung.

Aus fertigungstechnischen Gründen sind bei den scheibenförmigen Statorblechen (420) V-förmige Ausklinkungen vorgesehen, die am radial äußeren Rand der Statorbleche angeordnet sind, wobei die Ausklinkung in Richtung auf das Zentrum des Statorblechs (420) konvergieren.

Große Formgebungsfreiheit und Bauraumnutzbarkeit und damit ein wirtschaftlicher Aufbau für den Stator (40) und damit für den Elektromotor ist möglich, wenn die Länge der Klauenpole (42) in achsparalleler Richtung deutlich größer ist als der halbe Innendurchmesser des Stators (40).

Um die Klauenpole zu fixieren und deren Abstand voneinander aufrecht zu erhalten, sollen diese über ein elektrisch isolierendes Kunststoffmaterial miteinander verbunden sein. Vorzugsweise wird dies so gestaltet, dass die Klauenpole mit plastisch verarbeitbarem Kunststoffmaterial in Form eines Isolierstoffkörpers (46) für die Statorwicklung umspritzt sind.

In Weiterbildung dieses Erfindungsgedankens wird vorgeschlagen den Isolierstoffkörper (46) mit Klemmschneidkontakten (63) auszubilden, wobei je anzuschließendem Wickeldraht ein Vorsprung (466) am Isolierstoffkörper in Axialrichtung vorgesehen ist, der einen Aufnahmeschlitz (461) für einen Anschlussdraht und eine Montageausnehmung (462) für einen Kontaktpin (62) aufweist.

Zweckmäßigerweise ist der Isolierstoffkörper (46) mit Befestigungsmitteln (463) für eine Leiterplatte (61) einstückig. Die Befestigungsmittel (463) sind dabei aus einem Anschlag (464) und einem Schnappmittel (465) zusammengesetzt. Der Anschlag bestimmt die axiale Lage der Leiterplatte in Bezug auf den Isolierstoffkörper und die Schnappmittel sorgen für einen sicheren Halt der Leiterplatte in dieser Lage wobei sie in radialer Richtung eine Formschlüssige Verbindung darstellen und nur axial unter Krafteinwirkung überwindbar sind. Die Leiterplatte weist an die Schnappmittel im Durchmesser angepasste Ausnehmungen aus. So lässt sich die Leiterplatte schnell und einfach an den Isolierstoffkörper befestigen, wobei weiter vorgesehen ist, dass der Kontaktpin (62) einerseits eine Klemmschneidgeometrie aufweist und andererseits als lotfreier Einpresskontakt ausgebildet ist, der mit der Leiterplatte (61) elektrisch verbunden ist. Durch diese Ausbildung des Kontaktpins lässt sich bei der Montage der Leiterplatte gleichzeitig eine elektrische Verbindung zwischen der Statorwicklung und der Leiterplatte herstellen. Die Kontaktpins werden vorzugsweise vor der Montage der Leiterplatte in diese eingepresst.

Die Erfindung umfasst auch eine Kreiselpumpe die von einem Elektromotor der oben beschriebenen Art angetrieben wird.

Bei Verwendung in einer Kreiselpumpe wird vorgeschlagen, dass der Isolierstoffkörper mit einem Spalttopf (116) einstückig ist, der einen Nassraum (101) von einem Trockenraum (99) der Kreiselpumpe abgrenzt. Hierdurch lässt sich der Isolierstoffkörper als zusätzliches Bauteil einsparen.

Bei einer besonders bevorzugten Weiterbildung der Erfindung besteht der Spalttopf (116) aus einem Kunststoffmaterial, das für Laserlicht einer Wellenlänge oder eines Wellenlängenbereichs transparent ist, der Spalttopf (116) als Bestandteil eines zweiten Gehäuseteils (104) mit einem ersten Gehäuseteil (103) verschweißt ist und der Spalttopf (116) als Bestandteil eines zweiten Gehäuseteils (104) mit einem Motorgehäuseteil (44) verschweißt ist. Das erste Gehäuseteil (103) oder das Motorgehäuseteil (44) bestehen aus einem dasselbe Laserlicht absorbierendem Material. Durch diese Anordnung ist es möglich die das erste Gehäuseteil (103) mit dem zweiten Gehäuseteil (104) und das zweite Gehäuseteil (104) mit dem Motorgehäuseteil (44) mit Hilfe des Laserdurchstrahlschweißverfahren fest und dicht miteinander zu verschweißen.

Das bevorzugte Verfahren zur Herstellung von Klauenpolen weist folgende Schritte auf: - Tiefziehen eines Topfs aus magnetisch leitfähigem Blechmaterial, - radiales Ausstanzen von Klauenpolen aus dem Topf, Umformen der Klauenpole in eine exakte Form. Vorteilig ist hier, dass eine ausreichende Rundheit der scheibenförmigen Statorbleche erzielt werden kann, so dass ein niedriger magnetischer Widerstand zu dem Rückschlussring herstellbar ist.

Ein vorteilhaftes Verfahren zur Herstellung von Klauenpolstatoren beinhaltet folgende Schritte: - Ausstanzen von flachen Klauenpolen, die über einen durchgehenden Blechstreifen miteinander verbunden sind, - Rollbiegen des Blechstreifens, - Verschweißen der Enden der Blechstreifen miteinander, - Umspritzen der Klauenpole mit einem Kunststoffmaterial in Form einer Isolierstoffkörpers, - radiales Ausstanzen von Stegen (423), welche die Blechstreifen miteinander verbinden, - Bewickeln des Isolierstoffkörpers, - Montage eines Rückschlussrings und Verstemmung mit dem rollgebogenen Statorteil.

Ein Ausführungsbeispiel wird nachfolgend anhand der Zeichnung näher erläutert.
Es zeigen:
Fig. 1 eine ringscheibenförmiges Statorblech mit Klauenpolen,
Fig. 2 zwei voneinander getrennte Statorbleche,
Fig. 3 zwei Statorblech-Bereiche, die durch Blechbrücken miteinander verbunden sind,
Fig. 4 eine Seitenansicht (von rechts) eines rohrförmigen Rückschlussrings,
Fig. 5 eine Vorderansicht des Rückschlussrings,
Fig. 6 eine räumliche Darstellung des Rückschlussrings,
Fig. 7 eine Seitenansicht (von links) des Rückschlussrings,
Fig. 8 ein Stator vor einem Umformprozess,
Fig. 9 der Stator nach dem Umformprozess,
Fig. 10, der Stator nach dem Umformprozess aus einer anderen Perspektive und
Fig. 11 eine Schnittansicht durch eine erfindungsgemäße Kreiselpumpe.

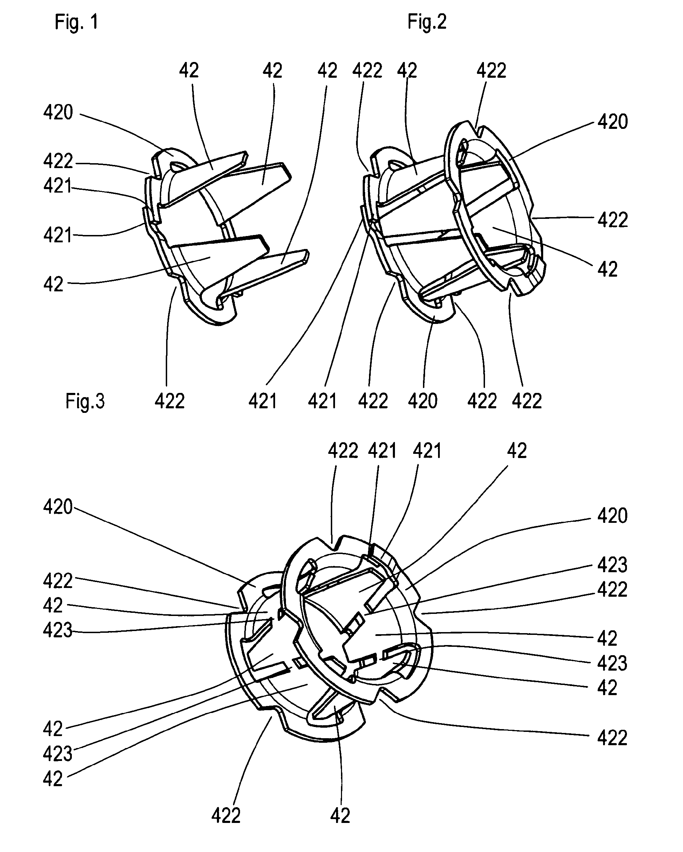

Fig. 1 zeigt ein ringscheibenförmiges Statorblech 420 mit vier Klauenpolen 42, die rechtwinklig vom Statorblech 420 abgebogen sind, wobei die Statorbleche 420 Enden 421 aufweisen, die überlappend miteinander verschweißt sind. Die Ringscheibe 420 weist an ihrem Umfang V-förmige Aussparungen 422 auf, die gleichmäßig über den Umfang verteilt angeordnet sind. Die Klauenpole sind zur Verringerung eines Rastmoments trapezförmig geformt, wobei sie sich zu ihrem freien Ende hin verjüngen.

Fig. 2 zeigt in einer ersten Ausführungsform zwei ringscheibenförmige Statorbleche 420 mit ihren Klauenpolen 42 in Gegenüberstellung, wobei jeder Klauenpol 42 des ersten Statorblechs 420 auf einen Klauenpol des zweiten Statorblechs 420 folgt. Die beiden Statorbleche 420 sind in ihrer lagerichtigen Position dargestellt, sie sind aber nicht miteinander in Berührung. Im Einbauzustand sind die Bleche durch einen Isolierstoffkörper gehalten. Der Isolierstoffkörper spritzgusstechnisch verarbeitbarem Kunststoffmaterial und wird hierzu um die Bleche herumgespritzt, wobei zusätzlich Anschluss- und Befestigungsmittel mitgeformt werden.

Fig. 3 zeigt einen zweite Ausführungsform der Erfindung, bei dem die Statorbleche 420 mit den Klauenpolen 42 aus einem einzigen Blechstreifen ausgestanzt sind, wobei die Klauenpole 42 über Blechbrücken 423 miteinander verbunden sind. Die Blechbrücken können, wenn sie ausreichend dünn ausgebildet sind im Endmontagezustand im Stator verbleiben, verringern aber den Wirkungsgrad des Motors. Günstiger wäre es hier die Brücken zu entfernen. Dies ist mit einem höheren Fertigungsaufwand verbunden. Die Geometrie des Stators entspricht mit Ausnahme der Blechbrücken 423 der Anordnung aus Fig. 2. Zwei Klauenpole 42 sind nicht miteinander über Blechbrücken verbunden, sondern sie bilden die Enden des genannten Blechstreifens. Die ringscheibenförmigen Statorbleche 420 sind an ihren Enden 421 analog zu Fig. 1 und 2 miteinander verschweißt. Die Verschweißung kann in einer Vorrichtung erfolgen, bei der der Innendurchmesser des Klauenpolrings kalibriert wird.

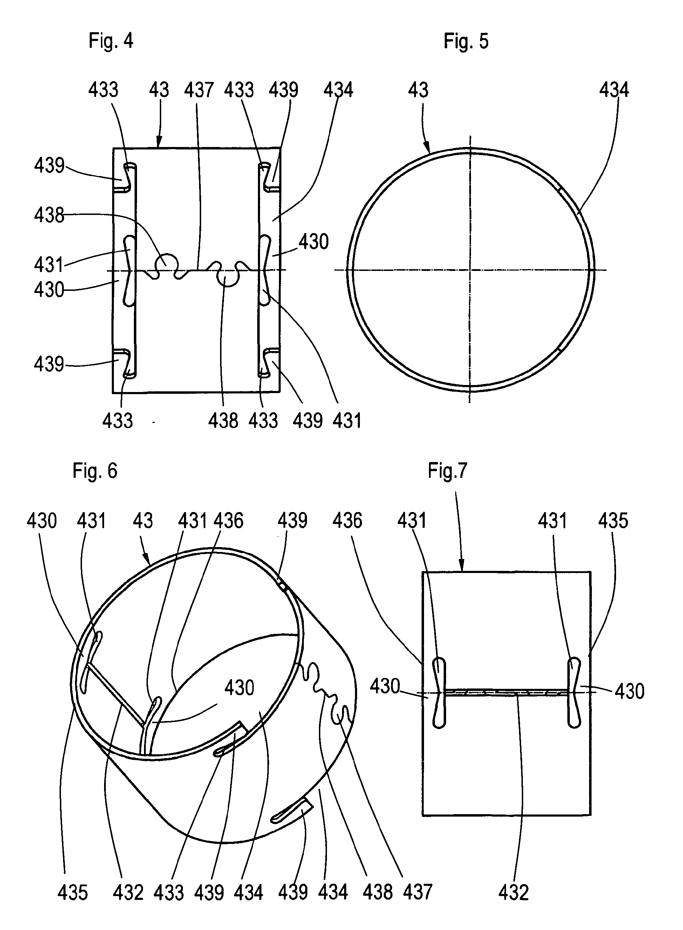

Fig. 4 zeigt eine Seitenansicht (von rechts) eines rohrförmigen Rückschlussrings 43, der aus einem Blechstreifen ausgestanzt und gerollt ist. Die beiden Enden des Blechstreifens sind an einer Nahtstelle 437 miteinander verbunden. Die Nahtstelle wird hier in Form von formschlüssigen und knopfartigen zueinander passenden Verbindungsmitteln 438 gebildet. Der Rückschlussring weist (hier an seiner Rückseite zu sehen) sich am Umfang des Rückschlusses und in seinem Randbereich angeordnete Schlitze 431 auf, die zu ihrer Mitte hin verjüngt sind und die an ihren Enden Radien aufweisen. Wie in Fig. 6 und 7 deutlich erkennbar ist, sind zwei Schlitze 431 vorhanden, die im gleichen Umfangsbereich aber an gegenüberliegenden Rändern 435, 436 angeordnet sind. Die beiden Schlitze 431 sind durch einen Verbindungsschlitz 432, der jeweils von der Mitte der Schlitze 431 ausgeht miteinander verbunden. Die Schlitze 431 und 432 bilden zusammen eine H-Form. Die Schlitze 431 grenzen jeweils einen Steg 430 vom Rückschlusskörper ab. Weiter zeigen die Fig. 4 und 6 offene Schlitze 433, die zu einer Aussparung 434 hin offen sind. Durch die Schlitze 433 bilden sich Blechzungen 439, die durch radiales Umbiegen (nach innen) zur axialen Sicherung der Statorbleche 420 dienen. Die Blechbrücken 430 dienen sowohl zur axialen Sicherung der Statorbleche 420 als auch zur Verringerung des Durchmessers des Rückschlusses. Durch radiales Verformen der Blechbrücken 430 wird der Verbindungsschlitz 432 verengt, gegebenenfalls bis sich die beiden Randbereiche des Verbindungsschlitzes 432 berühren.

In Fig. 5 ist eine Vorderansicht des Rückschlussrings 43 mit der Aussparung 434 dargestellt.

Fig. 6 zeigt eine räumliche Darstellung des Rückschlussrings 43 und Fig. 7 eine Seitenansicht (von links).

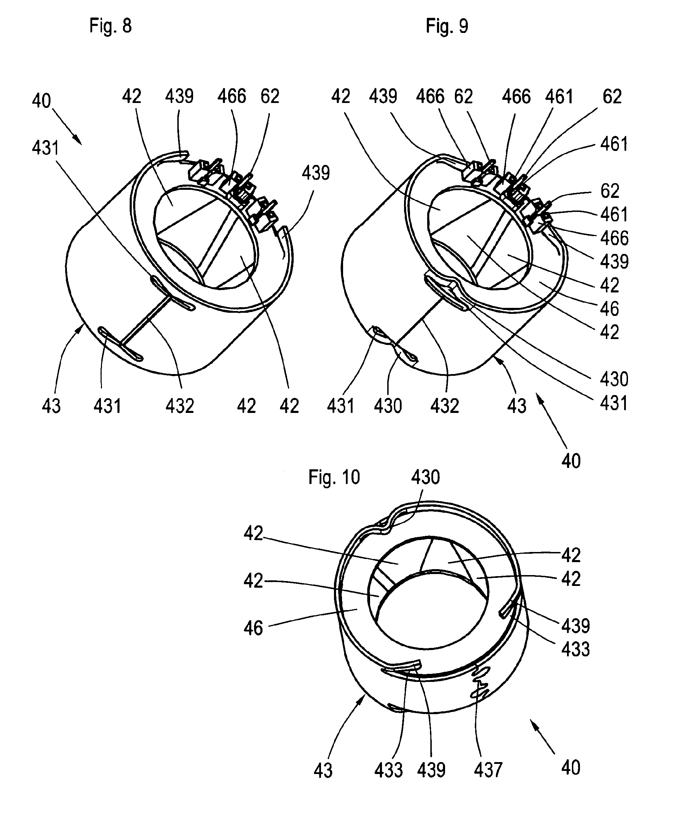

In Fig. 8 ist der Rückschlussring 43 auf einer bewickelten Statorbaugruppe aus Statorblechen 420 (verdeckt) mit Klauenpolen 42, Isolierstoffkörper 46, der Um die Statorbleche gespritzt ist, welcher Isolierstoff körper Vorsprünge 466 aufweist, die mit einem Aufnahmeschlitz 461 versehen sind, in dem ein Drahtende einer Statorwicklung eingelegt und mit einem Kontaktpin 62 kontaktiert ist. In Fig. 8 ist ein Stator 40 vor einem Umformprozess dargestellt, mit den Schlitzen 431, dem Verbindungsschlitz 432, den Blechbrücken 430 und den Blechzungen 439. Es ist ein deutlicher Abstand zwischen den beiden Begrenzungen des Verbindungsschlitzes 432 in Umfangsrichtung des Rückschlussringes 43 zu erkennen.

Fig. 9 zeigt den Stator nach dem Umformprozess, wobei die Blechbrücken 430 radial nach innen umgeformt sind, wodurch Zugkräfte in den Blechbrücken 430 für eine Verengung des Verbindungsschlitzes 432 gesorgt haben. Je nach Toleranzverhältnissen der Statorbaugruppe auf die der Rückschluss montiert ist, kann der Verbindungsschlitz 432 vollständig geschlossen sein oder noch einen geringen Zwischenraum aufweisen. Die Blechzungen 439 sind ebenfalls nach innen gebogen und bilden zusammen mit den verformten Blechbrücken 430 eine Axialsicherung für die Statorbaugruppe.

Fig. 10 zeigt den Stator ebenfalls nach dem Umformprozess, wobei aus einer anderen Perspektive auch die Blechzungen 439 zu sehen sind, die ebenfalls bei dem Umformprozess nach innen gebogen wurden. Die Blechzungen 439 bilden zusammen mit den nach innen verformten Blechbrücken 30 eine zuverlässige Axialsicherung der Statorbaugruppe. Die Schlitze 431 und 433 werden beim Umformprozess erweitert.

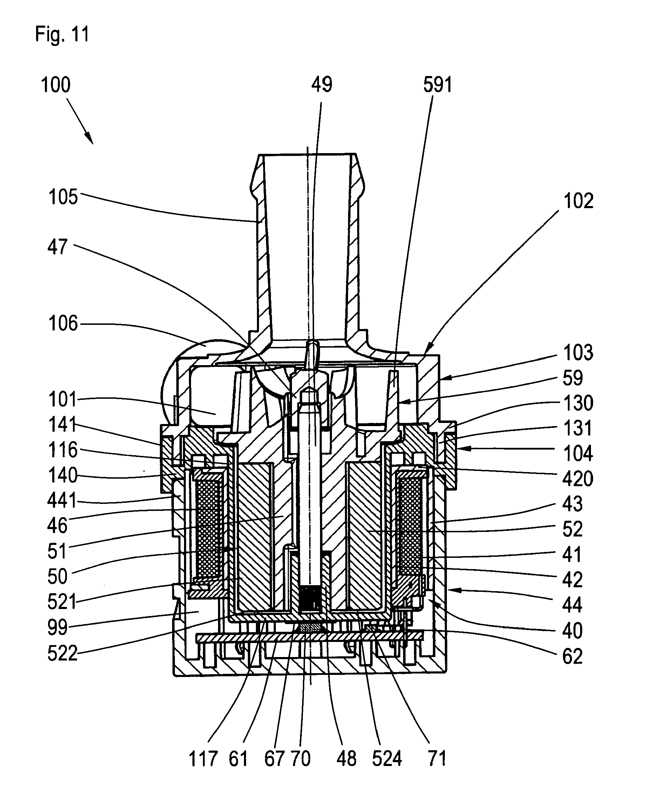

Fig. 11 zeigt eine Schnittansicht durch eine erfindungsgemäße Kreiselpumpe 100, mit einem Pumpengehäuse 102, bestehend aus einem ersten Gehäuseteil 103 und einem daran anschließenden zweiten Gehäuseteil 104. Ein Motorgehäuseteil 44 begrenzt einen Trockenraum, der von einem Stator (40) eines elektronisch kommutierten Gleichstrommotors und seiner Ansteuerelektronik ausgefüllt wird. Das Motorgehäuseteil 44 schließt an das zweite Gehäuseteil 102 and. Das erste und das zweite Gehäuseteil 103, 104 begrenzen einen Nassraum 101 der Kreiselpumpe. Das zweite Gehäuseteil 104 ist einstückig mit einem Spalttopf 116 geformt, welcher den Nassraum 101 von einem Trockenraum 99.

Der Nassraum 101 enthält eine Achse 49, die zwischen einer spalttopfseitigen Achsaufnahme 48 und einer saugstutzenseitigen Achsaufnahme 47 fest eingebaut ist. Eine Rändelung am Achsenende verhindert eine Verdrehung der Achse 49 während des Pumpenbetriebs. Auf der Achse 49 ist ein Festlager 54 drehbar gelagert, welches in einer hohlen Welle 51 des Rotors 50 eingepresst ist. Die Welle 51 ist einstückig mit einem Pumpenlaufrad 59, das mehrere etwa spiralförmig geformte Flügel 591 für die Flüssigkeitsförderung enthält. Die Stirnflächen des Festlagers 54 können sich axial unter Zwischenlage von Anlaufscheiben gegen die spalttopfseitige Achsaufnahme 48 und gegen die saugstutzenseitige Achsaufnahme 47 abstützen. Ein hohlzylindrischer Ferritmagnet 52 ist auf die hohle Welle 51 aufgeklebt, wobei ein elastischer Kleber verwendet wird, der in vier oder fünf in die Hohlwelle geformte achsparallele Nuten 511 eingebracht ist.

Der Trockenraum 99 enthält den Stator 40 des elektronisch kommutierten Gleichstrommotors 10, der in Form einer hohlzylindrischen Statorwicklung 41 ausgebildet ist, wobei deren Magnetfeld im Betrieb über Klauenpole in alternierende Weise an den Umfang des Spalttopfs 116 geführt wird und mit dem hohlzylindrsichen Permanentmagneten 52 im Nassraum 101 wechselwirkt. Der magnetische Kreis wird durch einen Rückschlussring 43, der mit den Klauenpolen 42 verbunden ist, geschlossen. Die Klauenpole 42 sind durch Umspritzen mit einem Isolierstoffkörper 46 versehen, der die Klauenpole 42 mechanisch aber nicht magnetisch miteinander verbindet. Der Stator 40 weist im vorliegenden Beispiel vier Polpaare auf. Der Isolierstoffkörper 46 ist geometrisch so geformt, dass die Wicklungsdrähte der Statorwicklung 41 mit Klemmschneidkontakte aufweisende Kontaktpins 62 verbindbar sind, wobei diese Klemmschneidkontakte im Isolierstoffkörper 46 mechanisch befestigbar sind. Die Kontaktpins 62 sind als Kombi-Kontakte geformt und an ihrem dem Klemmschneidkontakt 63 gegenüberliegenden Ende in eine Leiterplatte 61 eingepresst und dadurch mit dieser kontaktiert. Die Kontaktpins 62 enthalten hierfür ein oder zwei verformbare Einpresszonen. Die Leiterplatte 61 enthält einen Hall-Sensor 71, einen integrierten Schaltkreis 70 IC für die Beschaltung der Statorspule und einen PTC für den Wicklungsschutz und Steckerpins 64 für die Spannungsversorgung. Das Motorgehäuseteil 44 beinhaltet ein Steckergehäuse 65 in welchem die Steckerpins 64 angeordnet sind. Elektronische Bauteile mit großer Verlustwärme werden über Wärmeleitfolien 67 zum Nassraum 101 hin entwärmt. Leiterbahnen, die zur Kontaktierung von zu kühlenden Bauelementen dienen, sind so dimensioniert, dass zur leichteren Wärmeabfuhr möglichst breite Leiterbahnen 66 auf der Leiterplatte 61 vorgesehen sind. Um eine besonders gute Ausnutzung der Leiterplatte 61 und eine optimale Wärmeabfuhr zu erreichen, sind die unterschiedlichen Leiterbahnen 66 unterschiedlich breit ausgeführt, je nach dem wie viel Wärme in dem zu kontaktierenden Bauteileanschluss entsteht. In der Welle 51 ist eine Längsnut als Kühlkanal zwischen einem Boden 117 des Spalttopfs 116 und dem Pumpenlaufrad 59 eingeformt, der eine kontinuierliche Umwälzung des Fördermediums auch im Innenbereich des Spalttopfs 116 erzwingt. Die Leiterplatte ist zwischen einer Stirnseite 45 des Motorgehäuses 44 und dem Boden 117 des Spalttopfs 116 angeordnet und über die Wärmeleitfolie 67 in wärmeleitendem Kontakt mit dem Boden 117 gehalten.

Das erste Gehäuseteil 103 weist einen ersten Flansch 130 und einen ersten daran anschließenden Ring 131 auf. Das zweite Gehäuseteil 104 weist einen zweiten Flansch 140 und einen zweiten daran anschließenden Ring 141 auf. Das Motorgehäuseteil weist einen dritten Ring 441 auf. Der zweite Flansch 140 und der zweite Ring 141 bilden im Querschnitt zusammen eine T-Form. Es sind vier Dichtungsbereiche 133, 144, 145 und 444 vorgesehen. Der erste Dichtungsbereich befindet sich auf der radial außen liegenden Seite des ersten Rings 131 am ersten Gehäuseteil 103. Gegenüberliegend auf der radial innen liegenden Seite des zweiten Rings 141 und des zweiten Gehäuseteils 104 befindet sich der zweite Dichtungsbereich 144. Ebenfalls auf der radial innen liegenden Seite des zweiten Rings 141 und des zweiten Gehäuseteils 104 befindet sich der dritte Dichtungsbereich 145. Diesem gegenüberliegend auf der radial außen liegenden Seite des dritten Rings 441 und des Motorgehäuseteils 44 befindet sich der vierte Dichtungsbereich 444. Das zweite Gehäuseteil 104 besteht aus einem für Laserlicht einer Wellenlänge oder eines Wellenlängenbereichs durchlässiges Material. Das erste Gehäuseteil 103 und das Motorgehäuseteil 44 bestehen aus einem dasselbe Laserlicht absorbierendem Material. Dadurch lässt sich ein Laserstrahl ohne Erwärmung des transparenten Materials bis zu einer Nahtstelle führen. Dort trifft der Strahl auf Material, das das Licht absorbiert und in Wärme umwandelt, wodurch der Kunststoff aufschmilzt und eine innige Verbindung mit dem benachbarten Material eingeht.

Da die beiden zu verschweißenden Dichtungsbereiche nahe beieinander liegen ist es ohne Schwierigkeiten möglich die beiden Nähte in einer Vorrichtung und in einem Arbeitsgang herzustellen. Die Schweißvorrichtung kann zwei einzelne Laser aufweisen, wobei mit jeweils einem Laserstrahl eine Schweißnaht hergestellt wird oder sie kann einen einzigen Laser aufweisen, dessen Ausgangsstrahl durch einen Strahlteiler in zwei Strahlenbündel geteilt wird, von denen jeder eine der Schweißnähte erzeugt. Im vorliegenden Beispiel werden die Laserstrahlen radial auf das Pumpengehäuse gelenkt.

### Bezugszeichenliste

- 10: Elektromotor
- 20: Luftspalt
- 40: Stator
- 41: Statorwicklung
- 42: Klauenpol
- 420: ringscheibenförmige Statorbleche
- 421: Ende
- 422: Aussparung
- 423: Steg
- 424: Luftspalt
- 43: Rückschlussring
- 430: Blechbrücke
- 431: Schlitz
- 432: Verbindungsschlitz
- 433: offener Schlitz
- 434: Freisparung
- 435: erster Rand
- 436: zweiter Rand
- 437: Nahtstelle
- 438: Verbindungsmittel
- 439: Blechzunge
- 44: Motorgehäuse
- 45: Stirnseite (des Motorgehäuses)
- 46: Isolierstoffkörper
- 461: Aufnahmeschlitz
- 462: Montageausnehmung
- 463: Befestigungsmittel
- 464: Anschlag
- 465: Schnappmittel
- 466: Vorsprung
- 467: Halterung (für Steckerpin)
- 47: saugstutzenseitige Achsaufnahme
- 48: spalttopfseitige Achsaufnahme
- 49: Achse
- 50: Rotor
- 51: Welle
- 511: Nut
- 512: Scheibe
- 52: hohlzylindrischer Permanentmagnet
- 521: Arbeitsmagnetisierung
- 522: Sensorspur-Magnetisierung
- 523: Stirnseite (des Permanentmagneten)
- 524: Sicherheitsspalt
- 53: elastisches Verbindungsmittel
- 531: erster Bereich (breit)
- 532: zweiter Bereich (schmal)
- 54: Festlager
- 58: Längsnut (für sekundären Flüssigkeitskreislauf)
- 59: Pumpenlaufrad
- 591: Flügel
- 60: Elektronik
- 61: Leiterplatte
- 611: Ausnehmungen
- 62: Kontaktpin
- 63: Klemmschneidkontakt
- 64: Steckerpin
- 641: Anformungen
- 65: Steckergehäuse
- 66: Leiterbahn
- 67: Wärmeleitfolie
- 70: Integrierter Schaltkreis (IC)
- 71: Hall-Sensor
- 99: Trockenraum
- 100: Kreiselpumpe
- 101: Nassraum
- 102: Pumpengehäuse
- 103: erstes Gehäuseteil
- 104: zweites Gehäuseteil
- 105: Saugstutzen
- 106: Druckstutzen
- 109: Pumpenraum
- 111: runde Kontur
- 112: Sporn
- 113: Übergangsbereich
- 114: Umfangswandung
- 115: scharfe Kante
- 116: Spalttopf
- 117: Boden
- 118: Rotorraum
- 119: Vertiefung
- 120: spiralförmige Innenkontur
- 121: Aufnahme
- 122: Pumpenbefestigungsmittel
- 123: Verrundung
- 130: erster Flansch
- 131: erster Ring
- 133: erster Dichtungsbereich
- 140: zweiter Flansch
- 141: zweiter Ring
- 144: zweiter Dichtungsbereich
- 145: dritter Dichtungsbereich
- 150: Schwalbenschwanzkontur
- 151: komplementäre Kontur
- 152: V-förmige Ausnehmung
- 441: dritter Ring
- 444: vierter Dichtungsbereich

## Patentansprüche

1. Elektromotor (10) mit einem um eine zentrale Achse drehbar gelagerten Permanentmagnetrotor (50), einem bewickelten Stator (40) mit einer zylinderringförmigen Statorwicklung (41), Klauenpolen (42), die rechtwinklig zu scheibenförmigen Statorblechen (420) und um die zentrale Achse herum angeordnet sind und einem rohrförmigen Rückschlussring (43), der spielfrei mit den Statorblechen (420) verbunden ist, **dadurch gekennzeichnet, dass** die scheibenförmigen Statorbleche (420) mit Klauenpolen (42) einstückig sind und der Rückschlussring (43) mit den scheibenförmigen Statorblechen (420) verstemmt ist.

2. Elektromotor nach Anspruch 1, **dadurch gekennzeichnet, dass** der Rückschlussring (43) in seinem Randbereich an zumindest zwei Stellen Schlitze (431) aufweist, die sich entlang einer Umfangslinie erstrecken und an die Schlitze (431) angrenzende Blechbrücken (430) radial nach innen verformt sind.

3. Elektromotor nach Anspruch 2, **dadurch gekennzeichnet, dass** der Schlitz an seinen Enden einen Radius aufweist und sich in der Mitte verjüngt.

4. Elektromotor nach Anspruch 2 oder 3, **dadurch gekennzeichnet, dass** zumindest ein Schlitz (431) an einem ersten Rand (435) des Rückschlussrings (43) und zumindest ein weiterer Schlitz (431) in Axialrichtung am gegenüberliegenden zweiten Rand (436) des Rückschlussrings (43) angeordnet ist.

5. Elektromotor nach Anspruch 4, **dadurch gekennzeichnet, dass** ein dritter Schlitz in Form eines achsparallelen Verbindungsschlitzes (432) die beiden Schlitze (431) in deren Mittenbereich miteinander verbindet, wobei die drei Schlitze eine H-Form bilden.

6. Elektromotor nach Anspruch 5, **dadurch gekennzeichnet, dass** der Verbindungsschlitz (432) so breit ist, dass einerseits eine Verklemmungsfreie Montage des Rückschlussrings (43) auf die Statorbleche (420) und andererseits eine spielfreie und feste Verbindung zwischen dem Rückschlussring (43) und den Statorblechen (420) nach der Montage möglich ist.

7. Elektromotor nach Anspruch 5, **dadurch gekennzeichnet, dass** der Verbindungsschlitz (432) zwischen 0,5 und 2 mm breit ist.

8. Elektromotor nach Anspruch zumindest einem der vorangehenden Ansprüche, **dadurch gekennzeichnet, dass** zumindest ein weiterer, sich entlang einer Umfangslinie erstreckender und zu einem Randbereich des Rückschlussrings (43) offener Schlitz (433) vorgesehen ist, der radial nach innen verformt ist.

9. Elektromotor nach Anspruch 8, **dadurch gekennzeichnet, dass** der Schlitz (433) in eine Freisparung (434) des Rückschlussrings mündet.

10. Elektromotor nach Anspruch 8 oder 9, **dadurch gekennzeichnet, dass** der Schlitz (433) an seinem ersten Ende einen Radius aufweist und sich zu seinem gegenüberliegenden offenen Ende hin verjüngt.

11. Elektromotor nach Anspruch 8, 9 oder 10, **dadurch gekennzeichnet, dass** an jedem Rand (435, 436) zwei offene nach innen gebogene Schlitze (433) vorgesehen sind.

12. Elektromotor nach zumindest einem der vorangehenden Ansprüche, **dadurch gekennzeichnet, dass** der Rückschlussring (43) eine Nahtstelle (437) aufweist, an der zwei Enden des Rückschlussrings (43) fest miteinander verbunden sind.

13. Elektromotor nach Anspruch 12, **dadurch gekennzeichnet, dass** die Nahtstelle (437) um 180° zum Verbindungsschlitz (432) versetzt ist.

14. Elektromotor nach Anspruch 12 oder 13, **dadurch gekennzeichnet, dass** die Nahtstelle in ihrer Grundausrichtung parallel zum Verbindungsschlitz (432) verläuft.

15. Elektromotor nach Anspruch 12, 13 oder 14, **dadurch gekennzeichnet, dass** die Nahtstelle eine formschlüssige oder stoffschlüssige Verbindung aufweist.

16. Elektromotor nach Anspruch 15, **dadurch gekennzeichnet, dass** die Nahtstelle zueinander passende knopf- oder schwalbenschwanzförmige Verbindungsmittel aufweist.

17. Elektromotor nach Anspruch 16, **dadurch gekennzeichnet, dass** die Verbindungsmittel durch Verstemmen oder Verprägen gesichert sind.

18. Elektromotor nach Anspruch 15, **dadurch gekennzeichnet, dass** die Nahtstelle verschweißt ist.

19. Elektromotor nach zumindest einem der vorangehenden Ansprüche, **dadurch gekennzeichnet, dass** die scheibenförmigen Statorbleche (420) Aussparungen (422) aufweisen, die am radial äußeren Rand der Statorbleche (420) angeordnet und dabei gleichmäßig verteilt sind.

20. Elektromotor nach zumindest einem der vorangehenden Ansprüche, **dadurch gekennzeichnet, dass** die Länge der Klauenpole (42) in achsparalleler Richtung deutlich größer ist als der halbe Innendurchmesser des Stators (40).

21. Elektromotor nach zumindest einem der vorangehenden Ansprüche, **dadurch gekennzeichnet, dass** die Klauenpole mit plastisch verarbeitbarem Kunststoffmaterial in Form eines Isolierstoffkörpers (46) für die Statorwicklung (41) umspritzt sind.

22. Elektromotor nach Anspruch 21, **dadurch gekennzeichnet, dass** der Isolierstoffkörper (46) Klemmschneidkontakte (63) aufweist, wobei je anzuschliessendem Wickeldraht ein Vorsprung (466) in Axialrichtung vorgesehen ist, der einen Aufnahmeschlitz (461) für einen Anschlussdraht und eine Montageausnehmung (462) für einen Kontaktpin (62) aufweist.

23. Elektromotor nach Anspruch 21 oder 22, **dadurch gekennzeichnet, dass** der Isolierstoffkörper (46) mit Befestigungsmitteln (463) für eine Leiterplatte (61) einstückig ist.

24. Elektromotor nach Anspruch 23, **dadurch gekennzeichnet, dass** die Befestigungsmittel (463) aus einem Anschlag (464) und einem Schnappmittel (465) zusammengesetzt sind

25. Elektromotor nach Anspruch 22, 23 oder 24, **dadurch gekennzeichnet, dass** der Kontaktpin (62) einerseits eine Klemmschneidgeometrie aufweist und andererseits als lotfreier Einpresskontakt ausgebildet ist, der mit der Leiterplatte (61) elektrisch verbunden ist.

26. Kreiselpumpe die von einem Elektromotor nach zumindest einem der vorangehenden Ansprüche angetrieben wird.

27. Kreiselpumpe nach Anspruch 26, **dadurch gekennzeichnet, dass** der Isolierstoffkörper mit einem Spalttopf (116) einstückig ist, der einen Nassraum (101) von einem Trockenraum (99) der Kreiselpumpe abgrenzt.

28. Kreiselpumpe nach Anspruch 27, **dadurch gekennzeichnet, dass** der Spalttopf (116) aus einem Kunststoffmaterial besteht, das für Laserlicht einer Wellenlänge oder eines Wellenlängenbereichs transparent ist.

29. Kreiselpumpe nach 27 oder 28, **dadurch gekennzeichnet, dass** der Spalttopf (116) als Bestandteil eines zweiten Gehäuseteils (104) mit einem ersten Gehäuseteil (103) verschweißt ist.

30. Kreiselpumpe nach Anspruch 27, 28 oder 29, **dadurch gekennzeichnet, dass** der Spalttopf (116) als Bestandteil eines zweiten Gehäuseteils (104) mit einem Motorgehäuseteil (44) verschweißt ist.

31. Kreiselpumpe nach zumindest einem der vorangehenden Ansprüche, **dadurch gekennzeichnet, dass** das erste Gehäuseteil (103) oder das Motorgehäuseteil (44) aus einem dasselbe Laserlicht absorbierendem Material besteht.

32. Verfahren zur Herstellung von Klauenpolen mit den Schritten: - Tiefziehen eines Topfs aus magnetisch leitfähigem Blechmaterial, - radiales Ausstanzen von Klauenpolen aus dem Topf, Umformen der Klauenpole in eine exakte Form.

33. Verfahren zur Herstellung von Klauenpolstatoren mit den Schritten: - Ausstanzen von flachen Klauenpolen, die über einen durchgehenden Blechstreifen miteinander verbunden sind, - Rollbiegen des Blechstreifens, - Verschweißen der Enden der Blechstreifen miteinander, - Umspritzen der Klauenpole mit einem Kunststoffmaterial in Form einer Isolierstoffkörpers, - radiales Ausstanzen von Stegen (423), welche die Blechstreifen miteinander verbinden, - Bewickeln des Isolierstoffkörpers, - Montage eines Rückschlussrings und Verstemmung mit dem rollgebogenen Statorteil.
